# EUROPÄISCHE PATENTSCHRIFT

(11) **EP 0 883 305 B1**
(45) Veröffentlichungstag und Bekanntmachung des Hinweises auf die Patenterteilung: **29.10.2003**
(21) Anmeldenummer: 98110084.5
(22) Anmeldetag: 03.06.1998
(51) Int. Cl.: H04Q 1/14

(54) **Verteilereinrichtung für eine Telekommunikationsanlage**
Distribution device for a telecommunication exchange
Répartiteur pour un central téléphonique

(30) Priorität: 04.06.1997 DE 19723453
(43) Veröffentlichungstag der Anmeldung: 09.12.1998
(73) Patentinhaber: CCS Technology, Inc., Wilmington, DE 19803 (US)
(72) Erfinder: Brenner, Wolfgang, 82223 Eichenau (DE)
(74) Vertreter: Sturm, Christoph, Dipl.-Ing.

(56) Entgegenhaltungen:
- DE-A- 2 643 167
- DE-A- 3 625 422
- DE-A- 3 625 476
- US-A- 4 008 942
- "RADIO FREQUENCY INTERFERENCE SUPPRESSION CLIP AND MECHANICAL GUIDANCE AID" IBM TECHNICAL DISCLOSURE BULLETIN, Bd. 32, Nr. 8B, 1. Januar 1990, Seite 264/265 XP000082476

## Beschreibung

Die Erfindung bezieht sich auf eine Verteilereinrichtung für eine Telekommunikationsanlage mit stapelartig in einen Träger aneinandergereihten Kontaktbauteilen zum Anschließen von ankommenden und abgehenden Leitungen.

Eine derartige Verteilereinrichtung ist z.B. durch die DE 36 25 476 A1 bekannt geworden. Danach ist ein Kontaktbauteil mit einer Vielzahl von Kontaktteilen zum Anschluß von ankommenden und abgehenden Leitungen versehen. Die Kontaktteile sind mit rückseitigen Steckkontakten verbunden, die mit einer entsprechenden Vielzahl von Steckkontaktstellen der Schutzbaugruppe kontaktierbar sind. Die Schutzbaugruppe ist von der der Bedienseite abgewandten Rückseite des Kontaktbauteils her an die Steckkontakte anschaltbar. Sie weist eine gedruckte Leiterplatte auf, die mit Stromsicherungen und Überspannungsableitern bestückt ist. Eine für alle Überspannungsableiter gemeinsame Erdleiterbahn erstreckt sich bis in den Stirnseitenbereich der Schutzbaugruppe und bildet dort Kontaktzonen, die mit Federkontakten eines Erdkontaktstreifens kontaktierbar sind, der an einem Träger für die Kontaktbauteile befestigt ist.

Es ist üblich, derartige Verteilereinrichtungen herstellerseitig weitgehend fertigzustellen und mit den Kontaktbauteilen sowie gelegentlich mit den Schutzbaugruppen zu bestücken ;(vgl. z.B. DE-A-3 625 422). Durch Erschütterungen im Betrieb und insbesondere beim Transport von mobilen, vollständig in Containern fertigmontierten Vermittlungseinrichtungen besteht die Gefahr, daß sich die Stecklage der Schutzbaugruppe verändert, so daß die Stecksicherheit beeinträchtigt werden kann.

Der Erfindung liegt die Aufgabe zugrunde, die Stecksicherheit mit geringem Änderungs- und Fertigungsaufwand zu erhöhen.

Diese Aufgabe wird durch die Erfindung gemäß Anspruch 1 gelöst.

Die in der Einsteckrichtung ragenden Rastelemente können so schlank gehalten werden, daß sie die Einbaumaße der Kontaktbauteile und Schutzbaugruppen nicht verändern. Durch die Rastelemente werden die Schutzbaugruppen in ihrer Stecklage sicher gehalten mit den Kontaktbauteilen kontaktiert.

Vorteilhafte Weiterbildungen der Erfindung sind in den Unteransprüchen gekennzeichnet:

Die Rastelemente nach Anspruch 2 ermöglichen eine einfache und sichere Verrastung mit geringem Aufwand.

Die Weiterbildung nach Anspruch 3 erleichtert das Auswechseln eines bereits eingeschobenen Schutzsteckers.

Das Federblech nach Anspruch 4 ergibt sehr schlanke Rasthaken von hoher Stabilität und guter Verformbarkeit.

Das Federblech nach den Ansprüchen 5 und 6 benötigt wesentlich weniger Befestigungspunkte als viele Einzelbleche für die einzelnen Schutzbaugruppen. Bei diesen können die erforderlichen Hinterschneidungen ohne nennenswerten Mehraufwand am Gehäuse ausgeformt werden.

Das Federblech nach Anspruch 7 ermöglicht zusätzlich zur Rastfunktion die Erdung der Schutzbaugruppe mittels eines gemeinsamen Bauteils, was den Herstellungs- und Montageaufwand entsprechend verringert.

Durch die Weiterbildung nach Anspruch 8 können die Kontaktfedern und die Rastfedern in enger Nachbarschaft und raumsparend angeordnet werden.

Durch die Weiterbildung nach Anspruch 9 ist es möglich, das Federblech auch als internes Erdungsblech der Schutzbaugruppe zu verwenden, daß mit den Erdkontakten der zu erdenden Schutzelemente verbunden ist.

Durch die Weiterbildung des Anspruchs 10 kann der Erdkontakt der Schutzbaugruppe weitgehend in diese eingebettet werden, so daß eine vorstehende Feder vermieden wird, die versehentlich verbogen werden könnte.

Im folgenden wird die Erfindung anhand eines in der Zeichnung dargestellten Ausführungsbeispieles näher erläutert. Es zeigen:
- Figur 1: eine perspektivische Ansicht einer Verteilereinrichtung mit Kontaktbauteilen und Schutzbaugruppen,
- Figur 2: einen Ausschnitt aus der Verteilereinrichtung nach Figur 1 mit einem Federblech vor dem Einschieben der Schutzbaugruppe,
- Figur 3: das Federblech und die Schutzbaugruppe nach Figur 2 in vergrößerter Darstellung,
- Figur 4: eine Draufsicht auf eine abgewandelte Verteilereinrichtung mit einer abgeänderten Schutzbaugruppe,
- Figur 5: einen perspektivischen Ausschnitt aus den Teilen nach Figur 4 in vergrößerter Darstellung.

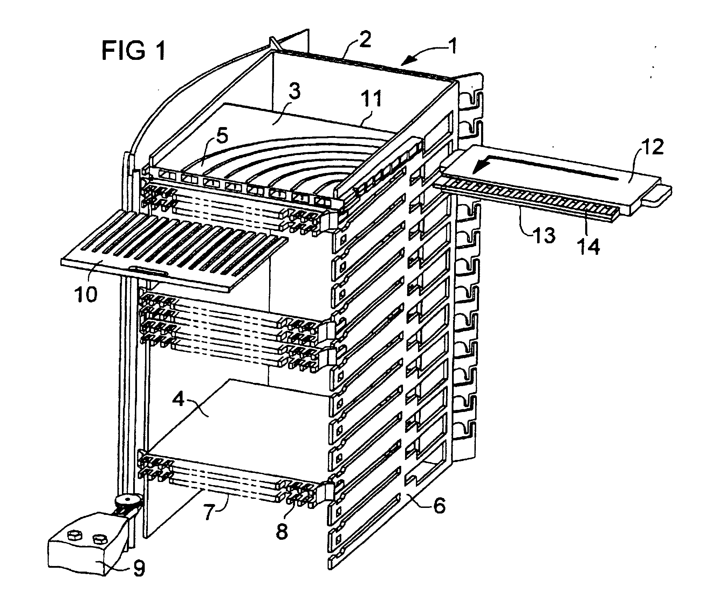

Figur 1 zeigt eine blockartige Verteilereinrichtung 1 mit einem Träger 2, in dem scheibenartige Drahtführungen 3 und Kontaktbauteile 4 sandwichartig übereinander gestapelt sind. Die Drahtführungen 3 weisen bogenförmig gekrümmte Drahtführungskanäle 5 auf, in denen ankommende und abgehende Leitungen einer Telekommunikationsanlage von Seitenwänden 6 zu einer Bedienseite 7 der Verteilereinrichtung 1 geführt werden können. Die Kontaktbauteile 4 sind an dieser Seite mit Schneidklemmen 8 versehen, in deren Klemmschlitze die ankommenden und abgehenden Leitungen mittels eines Anschlußwerkzeuges 9 kontaktgebend eingedrückt werden können. Die Schneidklemmen 8 sind mit Kontaktteilen verbunden, die im Inneren der Kontaktbauteile Trennkontakte bilden, die mittels von der Frontseite her einsteckbarer Trennstecker 10 unterbrochen werden können.

Die Kontaktbauteile 4 weisen auf ihrer der Bedienseite 7 gegenüberliegenden Rückseite 11 Steckkontakte für eine seitlich in die Verteilereinrichtung 1 einschiebbare Schutzbaugruppe 12 auf. Diese ist entlang ihrer dem Kontaktbauteil 4 zugewandten Frontseite 13 mit Steckkontaktstellen 14 versehen, die gemäß der angegebenen Pfeilrichtung zwischen die Steckkontakte der Kontaktbauteile 4 eingesteckt werden können.

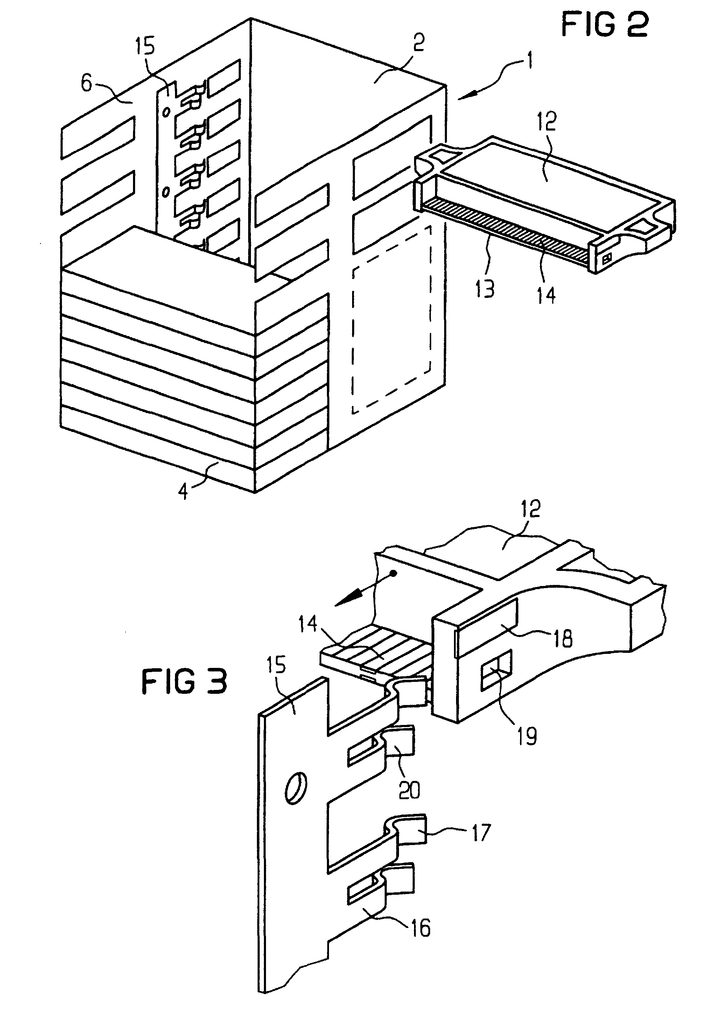

In Figur 2 sind die Teile nach Figur 1 vereinfacht dargestellt. Streifenförmige Federbleche 15 sind an der Innenseite der Seitenwände 6 des Trägers 2 sich in der Stapelrichtung erstreckend zwischen den Einbauplätzen für die Kontaktbauteile 4 und für die Schutzbaugruppen 12 z.B mittels Nieten oder anderen Halteelementen kontaktgebend befestigt. Das Federblech 15 ist mit freigeschnittenen Rastfedern 16 und Kontaktfedern 17 (Figur 3) versehen, die nicht erfindungsgemäß entgegen der Steckrichtung der auf die Kontaktbauteile aufzusteckende Schutzbaugruppen 12 gerichtet sind. Die Schutzbaugruppe kann zunächst von der Seite her durch eine Öffnung der Seitenwand 6 hindurch in den Innenraum des Trägers 2 eingeschoben werden. Danach wird sie zur Bedienseite 7 (Figur 1) hin auf das Kontaktbauteil 4 aufgesteckt.

Diese Phase ist in Figur 3 vergrößert dargestellt. Die Schutzbaugruppe 12 ist an ihren schmalen Stirnseiten mit Erdkontakten 18 und Ausnehmungen 19 versehen. Die Rastfedern 16 des Federblechs 15 weisen an ihrem freien Ende Rastnasen 20 auf. Nach dem Aufstecken der Schutzbaugruppe 12 auf das Kontaktbauteil 4 liegen die Kontaktfedern 17 unter Federspannung an den Erdkontakten 18 an.

Die Rastnase 20 ragt dann in die Ausnehmung 19 hinein, deren dem Federblech 15 zugewandte Innenwand eine Hinterschneidung für die Rastnase 20 bildet, so daß die Schutzbaugruppe 12 auch unter mechanischen Störbedingungen ihre Funktionsstellung sicher einhält. Jeweils eine der Rastfedern 16 und der Kontaktfedern 17 bilden ein eng benachbartes Federnpaar, daß durch einen dazwischenliegenden dünnen Trennschlitz hinsichtlich ihrer Auslenkbarkeit entkoppelt ist.

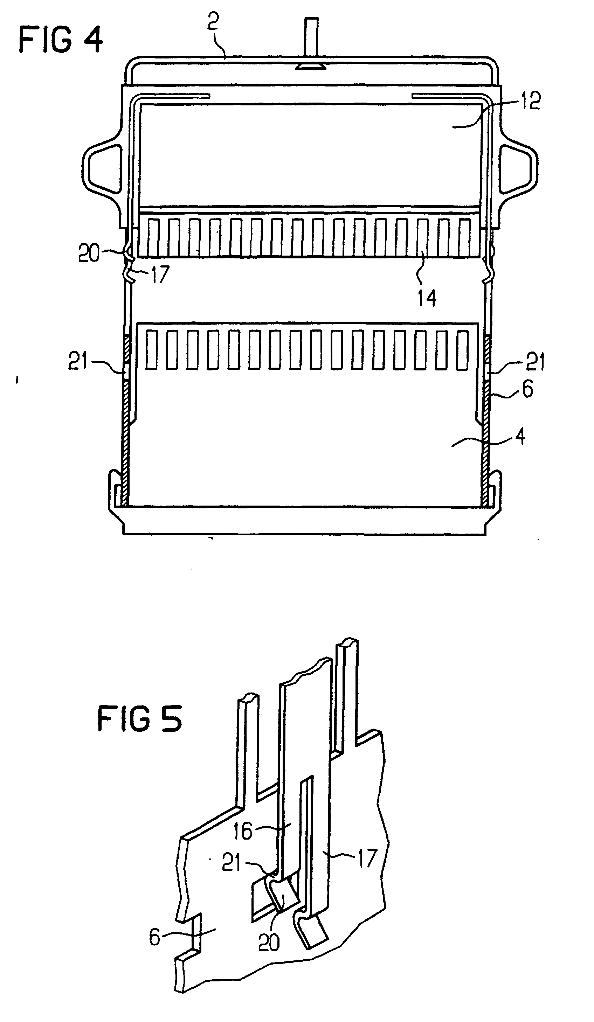

Die Figuren 4 und 5 zeigen eine modifizierte Verteilereinrichtung, bei der das Federnpaar des Federblechs 15 nicht an der Seitenwand 6 des Trägers 2, sondern an der Schutzbaugruppe 12 derart angebracht ist, daß nach dem Aufstecken der Schutzbaugruppe 12 in der angegebenen Pfeilrichtung die Rastfeder 16 mit ihrer Rastnase 20 in einen Durchbruch 21 in der Seitenwand 6 hineinragt und damit die Schutzbaugruppe 12 erfindungsgemäß schnappbar in ihrer Einbaulage fixiert.
Das Federblech ist hier in das Innere der Schutzbaugruppe 12 hineingeführt und bildet dort Erdkontakte für zu erdende Schutzelemente zum Überspannungsschutz der Leitungen.

Die Kontaktfeder 17 ist so ausgebildet, daß sie dann unter Federspannung an der Innenseite der Seitenwand kontaktgebend anliegt. Die Rastnase 20 weist dabei eine Abschrägung 21 auf, die es ermöglicht, die Schutzbaugruppe 12 durch kräftiges Drücken entgegen der Steckrichtung aus ihrer Einbaulage zu lösen.

## Patentansprüche

1. Verteilereinrichtung für eine Telekommunikationsanlage mit stapelartig in einem Träger (2) aneinandergereihten Kontaktbauteilen (4) zum Anschluß von ankommenden und abgehenden Telekommunikationsleitungen, wobei an jeweils eines der Kontaktbauteile (4) zumindest eine Schutzbaugruppe (12) ansteckbar ist,
**dadurch gekennzeichnet,**
**daß** die Schutzbaugruppe (12) mit dem Träger (2) oder dem Kontaktbauteil (4) mittels in die Einsteckrichtung ragender Rastelemente (z.B. 16) verrastbar ist.

2. Verteilereinrichtung nach Anspruch 1,
**dadurch gekennzeichnet,**
**daß** die Rastelemente als wechselseitig an der Schutzbaugruppe (12) bzw. dem Träger (2) oder dem Kontaktbauteil (4) angebrachte Hinterschneidungen und in der Steckrichtung ragende, transversal auslenkbare Rasthaken (z.B. 16) mit Rastnasen (20) ausgebildet sind, die die dazu komplementären Hinterschneidungen hintergreifen.

3. Verteilereinrichtung nach Anspruch 2,
**dadurch gekennzeichnet,**
**daß** die Rasthaken (z.B. 16) durch Abrundungen und/oder Abschrägungen (21) an den wechselseitigen Anlageflächen der Rastnasen (20) bzw. Hinterschneidungen schnappbar ausgebildet sind.

4. Verteilereinrichtung nach Anspruch 2 oder 3,
**dadurch gekennzeichnet, daß** die Rasthaken als Rastfedern (16) an einem Federblech (15) ausgebildet sind.

5. Verteilereinrichtung nach Anspruch 4,
**dadurch gekennzeichnet,**
**daß** das Federblech (15) am Träger (2) befestigt ist und sich in der Stapelrichtung über mehrere Einbauplätze für die Kontaktbauteile (4) erstreckt und
**daß** die Hinterschneidungen an einem Gehäuse der Schutzbaugruppe (12) ausgebildet sind.

6. Verteilereinrichtung nach Anspruch 5,
**dadurch gekennzeichnet,**
**daß** der Träger (2) aus einem U-förmig gebogenen Blech besteht, das die Kontaktbauteile (4) aufnimmt und
**daß** das Federblech (15) an einer Seitenwand (6) des Trägers (2) angebracht ist.

7. Verteilereinrichtung nach einem der vorhergehenden Ansprüche 4 bis 6,
**dadurch gekennzeichnet,**
**daß** die Schutzbaugruppe (12) zumindest einen Erdkontakt (18) zum Erden von Schutzelementen aufweist,
**daß** das Federblech (15) zusätzlich zu den Rastfedern (16) zumindest eine in der Einsteckrichtung ragende seitlich auslenkbare Kontaktfeder (17) aufweist, mittels der der Erdkontakt (18) mit einem Erdungsteil des Trägers (2) verbindbar ist und
**daß** die jeweils einstückig miteinander verbundenen Rastfedern (16) und die Kontaktfedern (17) hinsichtlich der seitlichen Auslenkbarkeit entkoppelt sind.

8. Verteilereinrichtung nach Anspruch 7,
**dadurch gekennzeichnet,**
**daß** die Kontaktfeder (17) und/oder die Rastfeder (16) transversal zur Stapelrichtung und transversal zur Einsteckrichtung auslenkbar ist.

9. Verteilereinrichtung nach Anspruch 7 oder 8,
**dadurch gekennzeichnet,**
**daß** das Federblech (15) der Schutzbaugruppe (12) zugeordnet ist, daß die Kontaktfeder (17) unmittelbar mit der Seitenwand (6) des Trägers (2) kontaktierbar ist und
**daß** die Hinterschneidung an einem Durchbruch (21) der Seitenwand (6) gebildet ist, in den die Rastnase (20) der Rastfeder (16) eingreift.

10. Verteilereinrichtung nach Anspruch 7 oder 8,
**dadurch gekennzeichnet,**
**daß** das Federblech (15) an der Seitenwand (6) des Trägers (2) befestigt ist und
**daß** der freiliegende Erdkontakt (17) der Schutzbaugruppe (12) an einem Erdkontaktblech ausgebildet ist, daß mit den einzelnen Schutzelementen kontaktiert ist.

## Claims

1. Distribution device for a telecommunications system with contact components (4) for the connection of incoming and outgoing telecommunications lines, which contact components are arranged consecutively like a stack in a supporting rack (2), it being possible for at least one protective assembly (12) to be plugged onto in each case one of the contact components (4),
**characterized**
**in that** the protective assembly (12) can be latched to the supporting rack (2) or to the contact component (4) by means of latching elements (e.g. 16) projecting in the plug-in direction.

2. Distribution device according to Claim 1,
**characterized**
**in that** the latching elements are designed as undercuts, provided reciprocally on the protective assembly (12) and/or the supporting rack (2) or the contact component (4), and latching hooks (e.g. 16) which project in the plugging direction, are capable of transverse deflection and have latching lugs (20), which engage behind the undercuts which are complementary thereto.

3. Distribution device according to Claim 2,
**characterized**
**in that** the latching hooks (e.g. 16) are designed such that they have a snap-action as a result of rounded portions and/or bevels (21) on the reciprocal bearing surfaces of the latching lugs (20) and undercuts.

4. Distribution device according to Claim 2 or 3,
**characterized**
**in that** the latching hooks are designed as latching springs (16) on a spring metal plate (15).

5. Distribution device according to Claim 4,
**characterized**
**in that** the spring metal plate (15) is fastened to the supporting rack (2) and extends in the direction of the stack across a plurality of installation locations for the contact components (4), and
**in that** the undercuts are formed on a housing of the protective assembly (12).

6. Distribution device according to Claim 5,
**characterized**
**in that** the support rack (2) consists of a metal plate which is bent in the shape of a U and receives the contact components (4) and
**in that** the spring metal plate (15) is fitted to a side wall (6) of the support rack (2).

7. Distribution device according to one of the preceding Claims 4 to 6,
**characterized**
**in that** the protective assembly (12) has at least one earth contact (18) for earthing protective elements,
**in that** the spring metal plate (15) has, in addition to the latching springs (16), at least one contact spring (17), which projects in the plug-in direction, is capable of lateral deflection and by means of which the earth contact (18) can be connected to an earthing part of the supporting rack (2) and
**in that** the contact springs (17) and the latching springs (16) which are integrally connected to one another in each case are decoupled with regard to the lateral deflection capability.

8. Distribution device according to Claim 7,
**characterized**
**in that** the contact spring (17) and/or the latching spring (16) can be deflected transversely with respect to the direction of the stack and transversely with respect to the plug-in direction.

9. Distribution device according to Claim 7 or 8,
**characterized**
**in that** the spring metal plate (15) is assigned to the protective assembly (12),
**in that** the contact spring (17) can make contact directly with the side wall (6) of the supporting rack (2), and
**in that** the undercut is formed on a perforation (21) of the side wall (6) into which the latching lug (20) of the latching spring (16) engages.

10. Distribution device according to Claim 7 or 8,
**characterized**
**in that** the spring metal plate (15) is fastened to the side wall (6) of the supporting rack (2), and
**in that** the exposed earth contact (17) of the protective assembly (12) is formed on an earth-contact plate which makes contact with the individual protective elements.

## Revendications

1. Répartiteur pour un central téléphonique avec des composants de contact (4) alignés en forme de pile dans un support (2) pour le raccordement de lignes de télécommunications arrivantes et partantes, au moins un ensemble de protection (12) pouvant être enfiché sur respectivement l'un des composants de contact (4),
**caractérisé en ce que**
l'ensemble de protection (12) peut être encliqueté avec le support (2) ou le composant de contact (4) au moyen d'éléments d'encliquetage (par exemple 16) dépassant dans le sens d'emboîtement.

2. Répartiteur selon la revendication 1,
**caractérisé en ce que** les éléments d'encliquetage sont conçus comme des contre-dépouilles placées à tour de rôle sur l'ensemble de protection (12) ou le support (2) ou le composant de contact (4) et des crochets de verrouillage (par exemple 16) dépassant dans le sens d'emboîtement et pouvant être déviés transversalement avec des ergots de verrouillage (20), qui saisissent par derrière les contre-dépouilles complémentaires à ces éléments.

3. Répartiteur selon la revendication 2,
**caractérisé en ce que**
les crochets de verrouillage (par exemple 16) sont conçus de façon à pouvoir être encliquetés par des arrondis et/ou des chanfreins (21) sur les surfaces d'appui alternées des ergots de verrouillage (20) et contre-dépouilles.

4. Répartiteur selon la revendication 2 ou 3,
**caractérisé en ce que**
les crochets de verrouillage sont conçus comme des ressorts de verrouillage (16) sur une tôle élastique à ressorts (15).

5. Répartiteur selon la revendication 4,
**caractérisé en ce que**
la tôle élastique à ressorts (15) est fixée sur le support (2) et s'étend dans le sens d'empilement sur plusieurs slots pour les composants de contact (4) et
**en ce que** les contre-dépouilles sont réalisées sur un boîtier de l'ensemble de protection (12).

6. Répartiteur selon la revendication 5,
**caractérisé en ce que**
le support (2) est à base d'une tôle pliée en forme de U, qui reçoit les composants de contact (4) et
**en ce que** la tôle élastique à ressorts (15) est disposée sur une paroi latérale (6) du support (2).

7. Répartiteur selon l'une quelconque des revendications précédentes 4 à 6,
**caractérisé en ce que**
l'ensemble de protection (12) présente au moins un contact de terre (18) pour la mise à la terre d'éléments de protection,
**en ce que** la tôle élastique à ressort (15) présente en supplément des ressorts de verrouillage (16) au moins un ressort de contact (17) dépassant dans le sens d'emboîtement et pouvant être dévié sur le côté, au moyen duquel le contact de terre (18) peut être relié à une partie de mise à la terre du support (2) et
**en ce que** les ressorts de verrouillage (16) reliés entre eux d'un seul tenant et les ressorts de contact (17) sont dissociés en ce qui concerne la possibilité de déviation latérale.

8. Répartiteur selon la revendication 7,
**caractérisé en ce que**
le ressort de contact (17) et/ou le ressort de verrouillage (16) peut/peuvent être dévié(s) transversalement au sens d'empilement et transversalement au sens d'emboîtement.

9. Répartiteur selon la revendication 7 ou 8,
**caractérisé en ce que**
la tôle élastique à ressorts (15) est attribuée à l'ensemble de protection (12), **en ce que** le ressort de contact (17) peut entrer en contact directement avec la paroi latérale (6) du support (2) et
**en ce que** la contre-dépouille est formée sur un passage (21) de la paroi latérale (6), dans lequel s'engage l'ergot de verrouillage (20) du ressort de verrouillage (16).

10. Répartiteur selon la revendication 7 ou 8,
**caractérisé en ce que**
la tôle élastique à ressorts (15) est fixée sur la paroi latérale (6) du support (2) et
**en ce que** le contact de terre (17) dégagé de l'ensemble de protection (12) est réalisé sur une tôle de contact de terre, qui est en contact avec les éléments de protection individuels.
